# FASCICULE DE BREVET EUROPEEN

(11) **EP 2 232 052 B1**
(45) Date de publication et mention de la délivrance du brevet: **17.08.2016**
(21) Numéro de dépôt: 08866788.6
(22) Date de dépôt: 24.12.2008
(51) Int. Cl.: F03B 11/00, F03B 3/02, F03B 13/00

(54) **MACHINE HYDRAULIQUE ET PROCÉDÉ D'AJUSTEMENT D'UNE TELLE MACHINE**
Hydraulische Maschine und Verfahren zum Abgleichen einer solchen Maschine
HYDRAULIC MACHINE AND METHOD OF ADJUSTING SUCH A MACHINE

(30) Priorité: 28.12.2007 FR 0760441
(43) Date de publication de la demande: 29.09.2010
(73) Titulaire: ALSTOM Renewable Technologies, 38100 Grenoble (FR)
(72) Inventeur: BOUVET, Yves, F-38660 La Terrasse (FR); BERTEA, Jean-François, F-07300 Saint Jean de Muzols (FR)
(74) Mandataire: General Electric Technology GmbH
(86) Numéro de dépôt international: PCT/FR2008/052419
(87) Numéro de publication internationale: WO 2009/083697

(56) Documents cités:
- CH-A5- 659 856
- DE-A1- 19 611 677
- DE-C- 719 267
- FR-A- 1 570 899
- GB-A- 1 300 148
- US-A- 3 612 713
- US-A1- 2005 087 933

## Description

L'invention a trait à une machine hydraulique qui comprend une roue mobile en rotation, par rapport à une structure fixe et autour d'un axe fixe, cette roue étant destinée à être traversée par un écoulement forcé d'eau. Un tel écoulement a pour effet d'entraîner la roue en rotation, lorsque la machine est une turbine. Un tel écoulement résulte de cette rotation, lorsque la machine est une pompe.

Une machine hydraulique, qu'il s'agisse d'une turbine, d'une pompe ou d'une turbine-pompe, est généralement équipée d'un dispositif, le plus souvent dénommé « labyrinthe », destiné à limiter les fuites d'eau qui résultent du fait qu'une quantité de l'eau amenée au voisinage d'une roue tend à s'écouler autour de celle-ci. De telles fuites induisent des pertes de rendement de l'installation à laquelle appartient la machine, ce que vise à limiter ce labyrinthe en définissant des jeux de fonctionnement relativement étroits entre la roue et une structure fixe de la machine de telle sorte que le chemin d'écoulement des fuites est relativement étroit, ce qui limite le débit de fuite.

Les labyrinthes sont généralement conçus sous la forme d'un cylindre concentrique avec l'axe de rotation de la roue, avec un ou plusieurs étages induisant un jeu le plus réduit possible. Afin d'éviter une usure prématurée du labyrinthe lors de la rotation de la roue, le jeu de fonctionnement doit être suffisant pour tenir compte des mouvements radiaux éventuels de la roue pendant les régimes transitoires et pour tenir compte de la dilatation de la roue sous l'effet de la force centrifuge. Dans ces conditions, le jeu de fonctionnement d'un labyrinthe actuel doit être déterminé en prenant en compte les conditions de fonctionnement les plus défavorables, à savoir les régimes transitoires, et en tenant compte des mouvements radiaux de la roue. Ceci conduit à la définition de jeux de fonctionnement relativement importants, d'où des fuites non négligeables autour de la roue, notamment dans le cas d'une turbine Francis.

Des problèmes analogues se posent avec les pompes et les turbines-pompes.

C'est à ces inconvénients qu'entend plus particulièrement remédier l'invention en proposant une machine hydraulique dans laquelle le jeu de fonctionnement du dispositif de limitation de fuites peut être optimisé, afin de réduire le débit de fuite.

A cet effet, l'invention concerne une machine hydraulique, selon la revendication 1, qui comprend une roue mobile en rotation, par rapport à une structure fixe et à un axe fixe, cette roue étant destinée à être traversée par un écoulement forcé d'eau, alors qu'au moins un dispositif de limitation de fuite d'eau est disposé entre la roue et la structure fixe, ce dispositif définissant un jeu de fonctionnement entre la roue et la structure fixe. Le dispositif de limitation de fuite comprend au moins un organe monté sur la structure fixe, déformable et/ou mobile, uniquement selon une direction radiale par rapport à l'axe de rotation de la roue, lorsque la roue est en rotation. entre une première configuration correspondant à une première valeur du jeu de fonctionnement et une deuxième valeur correspondant à une deuxième valeur du jeu de fonctionnement la machine comprenant des moyens de commande du passage de l'organe déformable et/ou mobile de sa première configuration vers sa deuxième configuration en fonction du régime de fonctionnement de la machine. L'organe présente une surface radiale interne tournée vers une surface radiale externe de la roue, le jeu de fonctionnement étant défini entre ces surfaces radiale(s) interne(s) et externe. Selon l'invention, l'organe est déformable et/ou mobile, alors que la roue est en rotation, et la surface radiale interne de l'organe est étagée, en ce sens qu'elle comprend trois portions formées chacune par une surface cylindrique à base circulaire, le diamètre d'une première portion étant supérieur à celui d'une deuxième portion et inférieur à celui d'une troisième portion parmi les portions de la surface radiale interne.

Grâce à l'organe déformable et/ou mobile, il est possible d'ajuster le jeu de fonctionnement du dispositif de limitation de fuites, qui est le plus souvent dénommé « labyrinthe », alors même que la machine est en cours d'utilisation, c'est-à-dire alors même que sa roue est en rotation. Ceci permet de tenir compte des différents besoins de jeu de fonctionnement correspondant aux différents régimes possibles de la machine. En particulier, il est possible d'adopter un jeu maximal lors des phases d'utilisation de la machine où la roue est susceptible de mouvements radiaux relativement importants ou d'une dilatation due aux efforts centrifuges. Ceci concerne notamment les phases de démarrage et de survitesse. En revanche, lorsque la machine est en phase de production, par exemple lorsqu'une turbine est couplée à un alternateur dans des conditions stabilisées, un jeu minimal peu être adopté dans la mesure où la rotation de la roue est également stabilisée. Ce jeu minimal permet de diminuer les fuites d'eau autour de la roue et d'augmenter ainsi le rendement de la machine. Par ailleurs, le caractère mobile de l'organe du dispositif de l'invention permet d'envisager son déplacement suite à un impact subit de la part de la roue lors d'un mouvement de celle-ci transversal par rapport à son axe de rotation.

Selon des aspects avantageux mais non obligatoires de l'invention, une telle machine peut incorporer une ou plusieurs des caractéristiques suivantes prises dans toutes combinaisons techniquement admissibles :
- la surface radiale externe se décompose en trois portions de diamètres croissants, de sorte que les surfaces interne et externe définissent entre elles un passage tortueux.
- Le dispositif de limitation de fuites comprend au moins un organe déformable, sous l'effet de la pression exercée par un fluide de commande, entre sa première configuration et sa deuxième configuration. L'organe déformable est avantageusement apte à se déformer en se contractant radialement pour passer de sa première à sa deuxième configuration. Cet organe déformable entoure la roue sur toute sa circonférence.
- Le dispositif de limitation de fluide comprend plusieurs organes mobiles radialement par rapport à l'axe de rotation de la roue, entre une première configuration correspondant à une première valeur du jeu de fonctionnement et une deuxième configuration correspondant à une deuxième valeur du jeu de fonctionnement.
- La machine comprend des moyens de centrage, par rapport à l'axe de rotation de la roue, du ou des organes dans chacune des première et deuxième configurations.
- L'organe ou chaque organe délimite, avec une partie de la structure fixe, une chambre de volume variable en fonction de la configuration prise par le ou les organes, cette chambre étant alimentée en fluide de commande sous pression.
- En variante, la machine comprend des vérins de commande de déplacement des organes mobiles entre les deux configurations qu'ils peuvent prendre.
- Selon une autre variante, la machine comprend au moins un moyen exerçant sur les organes mobiles un effort de rappel élastique vers l'une des deux configurations qu'ils peuvent prendre.
- La machine comprend des moyens d'immobilisation du ou de chaque organe en rotation autour de l'axe en rotation de la roue.
- Le fluide de commande est de l'eau prélevée sur la conduite d'alimentation de la roue en eau destinée à former l'écoulement forcé. En variante, le fluide de commande peut être un gaz, notamment de l'air, ou de l'huile.

L'invention concerne également une installation de conversion d'énergie hydraulique en énergie électrique, ou réciproquement, qui comprend une machine telle que mentionnée ci-dessus. Une telle installation a un meilleur rendement que celles de l'état de la technique.

L'invention concerne enfin un procédé d'ajustement qui peur être mis en oeuvre avec une machine telle que précédemment décrite, en vue d'optimiser le jeu de fonctionnement d'un dispositif de limitation de fuite. Selon ce procédé, l'ajustement du jeu de fonctionnement a lieu, alors que la roue est en rotation autour de son axe, en adoptant une première valeur du jeu de fonctionnement pendant certaines phase de rotation de la roue, qui comprennent au moins des régimes transitoires, et une deuxième valeur du jeu de fonctionnement pendant certaines autres phases de rotation de la roue, qui comprennent au moins un régime stabilisé.

De façon avantageuse, on adopte l'une des deux valeurs précitées du jeu de fonctionnement en contrôlant la pression et/ou la quantité d'un fluide de commande délivrée au dispositif de limitation de fuite.

L'invention sera mieux comprise et d'autres avantages de celle-ci apparaîtront plus clairement à la lumière de la description qui va suivre de six modes de réalisation d'une machine et d'une installation conformes à son principe, donné uniquement à titre d'exemple et faite en se référant aux dessins sur lesquels :
- la figure 1 est une coupe de principe d'une installation de conversion d'énergie de haute chute conforme à l'invention, comprenant une turbine Francis conforme à l'invention dans une première configuration de fonctionnement ;
- la figure 2 est une vue à plus grande échelle du détail Il à la figure 1 ;
- la figure 3 est une vue analogue à la figure 2 lorsque la turbine est dans une seconde configuration de fonctionnement ;
- la figure 4 est une vue à plus grande échelle du détail IV à la figure 1 ;
- la figure 5 est une vue analogue à la figure 4 lorsque la machine est dans une deuxième configuration de fonctionnement ;
- la figure 6 est une vue analogue à une partie de la moitié droite de la figure 1, pour une installation de basse chute et une turbine Francis conformes à un deuxième mode de réalisation de l'invention ;
- la figure 7 est une vue à plus grande échelle du détail VII à la figure 6 ;
- la figure 8 est une vue analogue à la figure 7 lorsque la machine est dans une deuxième configuration de fonctionnement ;
- la figure 9 est une vue à plus grande échelle du détail IX à la figure 6 ;
- la figure 10 est une vue analogue à la figure 9 lorsque la machine est dans une deuxième configuration de fonctionnement et
- la figure 11 est une section axiale partielle de principe d'une turbine Francis conforme à un troisième mode de réalisation de l'invention ;
- la figure 12 est une section partielle selon la ligne XII-XII à la figure 11 ;
- la figure 13 est une section analogue à la figure 11 pour une turbine conforme à un quatrième mode de réalisation de l'invention ;
- la figure 14 est une section analogue à la figure 11 pour une turbine conforme à un cinquième mode de réalisation de l'invention ; et
- la figure 15 est une section analogue à la figure 11 pour une turbine conforme à un sixième mode de réalisation de l'invention.

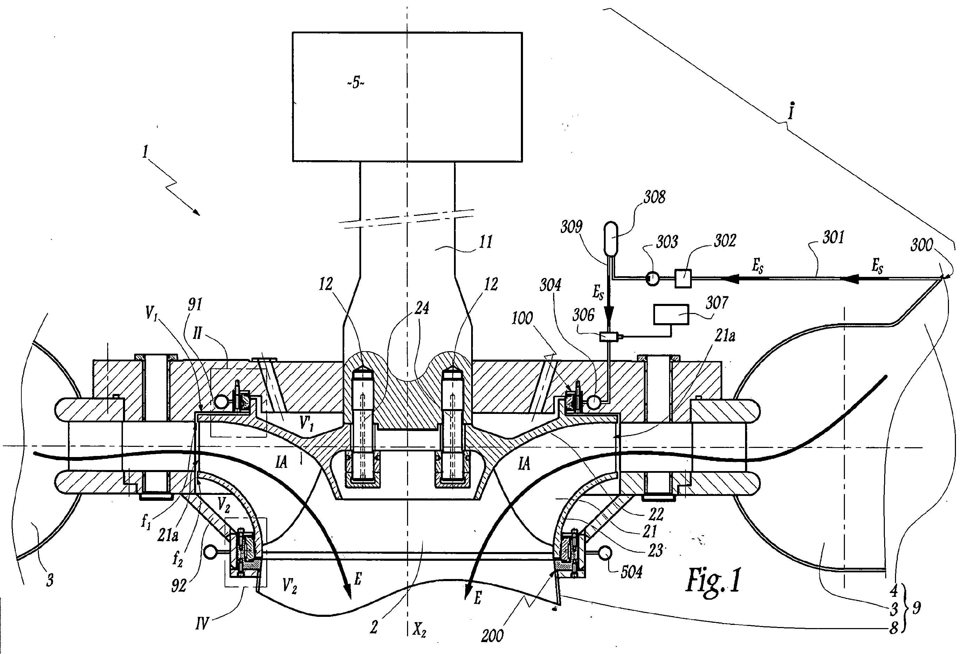

L'installation I représentée aux figures 1 à 5 comprend une turbine Francis 1 dont la roue 2 est alimentée à partir d'une bâche 3 dans laquelle débouche une conduite forcée 4. On note X₂ l'axe vertical fixe de rotation de la roue 2. La turbine 1 est accouplée par un arbre 11 à un alternateur 5 de production d'électricité. Entre la bâche 3 et la roue 2 sont disposées deux séries d'avant directrices et de directrices non représentées dont la fonction est de guider un écoulement E, provenant de la conduite 4 et destiné à traverser la roue 2, en direction d'un conduit d'évacuation 8.

La roue 2 comprend des aubes 21 qui s'étendent entre un plafond 22 et une ceinture 23. Les aubes définissent entre elles et avec le plafond 22 et la ceinture 23 des espaces inter-aubes IA dans lesquels transite l'écoulement E lorsqu'il passe à travers la roue 2.

La roue 2 est fixée en partie basse de l'arbre 11 au moyen de vis 24 serrées dans des taraudages 12 ménagés dans l'arbre 11.

La bâche 3, la conduite 4 et le conduit 8 appartiennent à une structure fixe 9 qui n'est que partiellement représentée sur les figures et qui supporte les parties tournantes de la turbine 1, notamment l'arbre 11 et la roue 2.

Lorsqu'il parvient au voisinage du bord d'attaque 21a des aubes 21, l'écoulement 21 peut s'engager dans les espaces inter-aubes IA. Il peut également pénétrer, à travers une fente annulaire f₁, dans un volume annulaire V₁ défini entre le plafond 22 et une partie 91 de la structure fixe 9. L'écoulement E peut également pénétrer à travers une fente annulaire f₂ dans un volume annulaire V₂ défini entre la ceinture 23 et une autre partie 92 de la structure fixe 9.

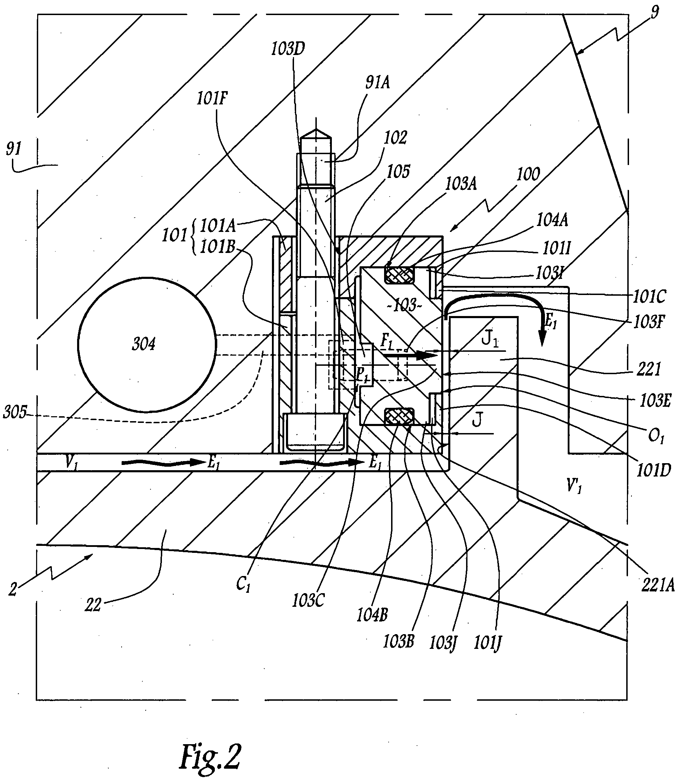

Les écoulements parasites de l'eau dans les volumes V₁ et V₂ sont représentés par des flèches E₁ et E₂ aux figures 2 à 5. Pour éviter que ces écoulements parasites E₁ et E₂ n'induisent des fuites importantes et une réduction significative du rendement de la turbine 1, des dispositifs de limitation de fuite 100 et 200 sont intercalés entre la roue 2 et les parties 91 et 92.

Le dispositif 100 vise à limiter les fuites du volume V₁ vers un volume V'₁ situé au-dessus du plafond 22, radialement entre le volume V₁ et l'axe X₂. Le dispositif 200 vise à limiter les fuites du volume V₂ vers le volume intérieur V'₂ du conduit 8. Les écoulements parasites E₁ et E₂ s'écoulent donc de la zone d'entrée de la roue 2, au voisinage des bords d'attaque 21 a, respectivement à travers les fentes f₁ et f₂ et les volumes V₁ et V₂, en direction des volumes V'₁ et V'₂.

Le dispositif 100 comprend un boîtier 101 formé de deux demi-coques 101A et 101B. Ce boîtier 101 est immobilisé sur la partie 91 au moyen de vis 102 qui traversent les deux demi-coques 101A et 101B et qui sont serrées dans des taraudages 91A ménagés dans la partie 91. Les demi-coques 101A et 101B sont circulaires et centrées sur l'axe X₂. Les vis 102 sont prévues en nombre suffisant pour permettre une fixation efficace du boîtier 101 sur la partie fixe 91.

Un anneau 103 est monté dans le boîtier 101 et délimite avec celui-ci une chambre de volume variable C₁ qui est isolée de l'extérieur par deux joints 104A et 104B montés dans des gorges 103A et 103B ménagées respectivement sur les faces supérieure et inférieure de l'anneau 103.

Des pions 105 sont engagés dans des logements 101F et 103F ménagés respectivement dans le boîtier 101 et dans l'anneau 103, de façon à immobiliser l'anneau 103 par rapport au boîtier 101, en rotation autour de l'axe X₂.

La demi-coque 101A comprend une paroi 101C dirigée vers la demi-coque 101B. De même, la demi-coque 101B comprend une paroi 101D dirigée vers la demi-coque 101A, plus particulièrement vers la paroi 101C. Une ouverture O₁ est définie entre les parois 101C et 101D et l'anneau 103 comprend un nez 103C qui est disposé entre les parois 101C et 101D.

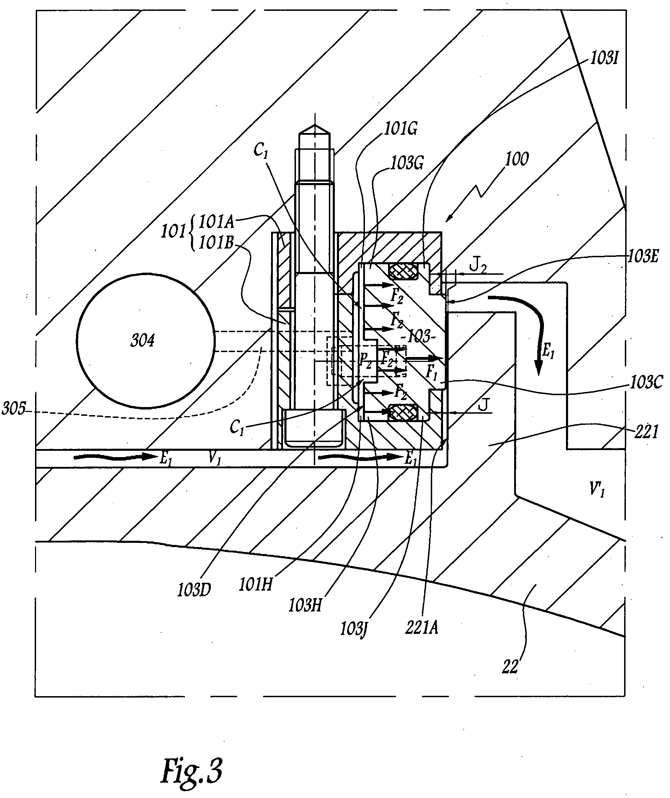

L'anneau 103 est réalisé dans un matériau élastiquement déformable, par exemple en acier ou en matériau composite. Cet anneau peut être contracté en direction de l'axe X₂, dans le sens de la flèche F₁ aux figures 2 et 3, sous l'effet d'un effort exercé sur sa surface radiale externe 103D. La contraction de l'anneau 103 en direction de l'axe X₂ est contrôlée en injectant de l'eau sous pression dans la chambre C₁.

Cette eau provient de la conduite forcée 4 dans laquelle elle est prélevée grâce à un piquage 300 qui constitue l'embouchure d'un tuyau 301 permettant d'acheminer un écoulement secondaire Eₛ vers un filtre 302, puis vers une pompe 303 qui permet d'augmenter la pression de l'écoulement Eₛ. Cette pompe alimente un réservoir-accumulateur 308 relié par un tuyau 309 à une conduite de forme torique 304 raccordée à la chambre C₁ par des piquages 305 débouchant dans le boîtier 101. Ces piquages 305 sont répartis autour de l'axe X₂ dans des plans décalés angulairement par rapport aux zones de réception des vis 102.

Par ailleurs, le plafond 22 de la roue 2 est équipé d'une aile 221 circulaire, monobloc avec ce plafond et qui s'étend vers le haut par rapport à la surface supérieure de celui-ci. En variante, l'aile 221 peut être démontable.

En configuration montée de la turbine 1, l'aile 221 a sa surface radiale externe 221A disposée en regard du dispositif 100. Plus précisément, la surface 221A est disposée en regard d'une partie de la surface radiale interne 103E de l'anneau 103, qui est en fait la surface du nez 103C accessible à travers l'ouverture O₁.

Lorsque la turbine 1 est en cours de fonctionnement, l'aile 221 tourne autour de l'axe X₂, avec la roue 2, alors que le dispositif 100 est fixe, car monté sur la partie 91. Un jeu de fonctionnement J doit donc être défini entre l'aile 221 et les parties en regard du dispositif 100, à savoir la demi-coque 101 B et l'anneau 103.

Du fait de ce jeu de fonctionnement J, l'écoulement E₁ qui pénètre dans le volume V₁ peut se propager en direction du volume V'₁, comme représenté par les flèches E₁ à la figure 2.

Dans la configuration de la figure 2, la chambre C₁ n'est pas alimentée en eau sous pression à partir de la conduite 304 et la pression P₁ de l'eau dans la chambre C₁ est faible, voire nulle, de sorte que, du fait de son élasticité, l'anneau 103 prend une configuration peu contrainte où la surface 103E ne fait pas saillie par rapport aux parois 101C et 101D. Le jeu J₁ entre les surfaces 103E et 221A est donc suffisamment important pour éviter les chocs entre l'aile 221 et le dispositif 100, ou pour limiter les efforts de contact, y compris en cas de défaut d'alignement de la roue 2 sur l'axe X₂ ou de dilatation de la roue 2 sous l'effet de la force centrifuge.

Lorsque la turbine 1 a atteint un régime de fonctionnement stabilisé, les risques de désalignement de la roue 2 par rapport à l'axe X₂ sont minimisés et le jeu J peut être réduit à une valeur J₂ inférieure à la valeur J₁ en faisant sortir le nez 103C du boîtier 101, en direction de l'aile 221. Ceci est obtenu en augmentant la pression de l'eau dans la chambre C₁ jusqu'à atteindre une valeur P₂ qui résulte de la mise en communication de la chambre C₁ avec le réservoir-accumulateur 308, à travers la conduite 304 et les piquages 305. La pression P₂ exerce sur la surface 103D de l'anneau 103 un effort réparti, représenté par les flèches F₂ à la figure 3, qui a pour effet de contracter radialement l'anneau 103 en direction de l'axe X₂, de telle sorte que la surface 103E se rapproche de la surface 221A, en diminuant la section de passage possible pour l'écoulement E₁. On limite ainsi les fuites d'eau, du volume V₁ vers le volume V'₁.

Une électrovanne 306, montée sur le conduit 301 entre la pompe 303 et la conduite 304, permet de contrôler la mise en communication du réservoir-accumulateur 308 et de la chambre C₁. Cette électrovanne est commandée par une unité électronique de commande 307. En variante, des électrovannes peuvent être installées sur les piquages 305, entre la conduite 304 et la chambre C₁, pour contrôler l'alimentation de cette chambre en eau sous pression.

Par ailleurs, une électrovanne non représentée permet de mettre en communication la chambre C₁ avec une ligne de purge, également non représentée, qui se déverse dans le conduit 8 ou dans un puits de drainage non représenté.

En cas de régime transitoire brusque de la turbine 1, notamment en cas de survitesse, il est donc possible, en fermant l'électrovanne 306 et en ouvrant l'autre électrovanne, de purger rapidement la chambre C₁, afin que l'anneau 103 reprenne par élasticité sa configuration de la figure 2 qui permet de limiter les risques de contact accidentel entre l'anneau 103 et l'aile 221.

Le boîtier 101 définit, dans le plan de coupe des figures 2 et 3, quatre coins rentrant 101 G, 101 H, 101I et 101J qui sont respectivement sensiblement complémentaires de quatre coins saillants 103G, 103H, 103I et 103J de la section de l'anneau 103 visible aux figures 2 et 3.

Les coins 101 G, 101 H, 103G et 103H constituent des moyens de centrage, par coopération de formes, de l'anneau 103 par rapport à l'axe X₂ dans la configuration de la figure 2. De la même façon, les coins 101I, 101J, 103I et 103J constituent des moyens de centrage, par coopération de formes, de l'anneau 103 dans la configuration de la figure 3.

En jouant sur la pression d'alimentation de la chambre C₁ à partir de la conduite 304 et sur les temps d'ouverture de l'électrovanne 306, il est possible de faire prendre à l'anneau 103 une configuration intermédiaire entre celles représentées respectivement aux figures 2 et 3, ce qui peut être adapté à certains régimes de fonctionnement de la turbine 1.

Les éléments constitutifs du dispositif 200 qui sont analogues à ceux du dispositif 100 portent les mêmes références numériques augmentées de 100. Le dispositif 200 comprend un boîtier 201 formé de deux demi-coques 201A et 201B montées sur la partie 92 et assemblées entre elles grâce à des vis 202. Un anneau élastiquement déformable 203 est disposé dans le boîtier 201 en étant soumis à la pression régnant dans une chambre C₂ de volume variable définie par le boîtier 201 et par l'anneau 203.

Deux joints toriques 204A et 204B sont respectivement disposés dans des gorges 203A et 203B ménagées respectivement sur les côtés supérieur et inférieur de l'anneau 203.

Des pions 205 sont prévus pour l'indexation, en rotation autour de l'axe X₂, de l'anneau 203 par rapport au boîtier 201.

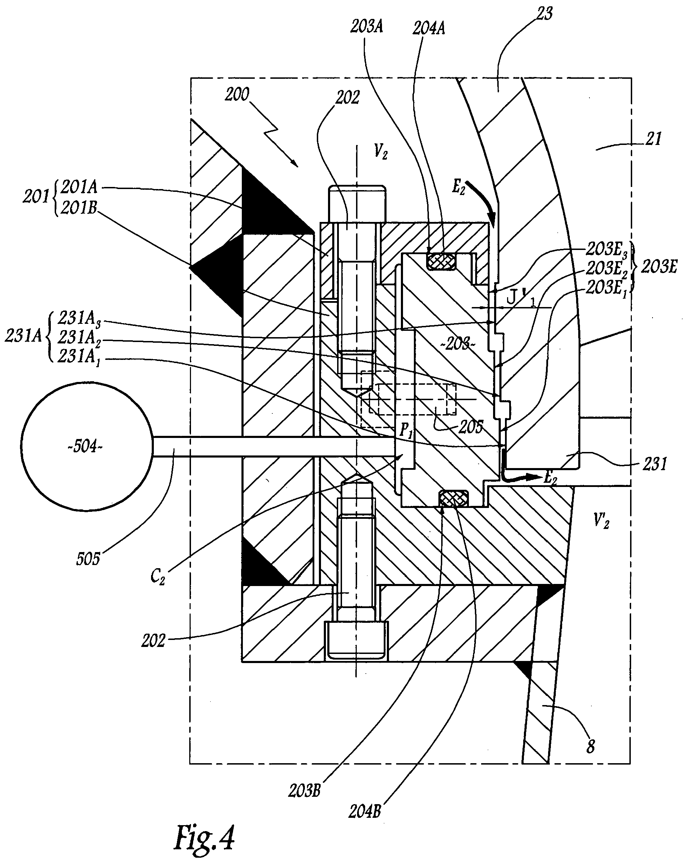

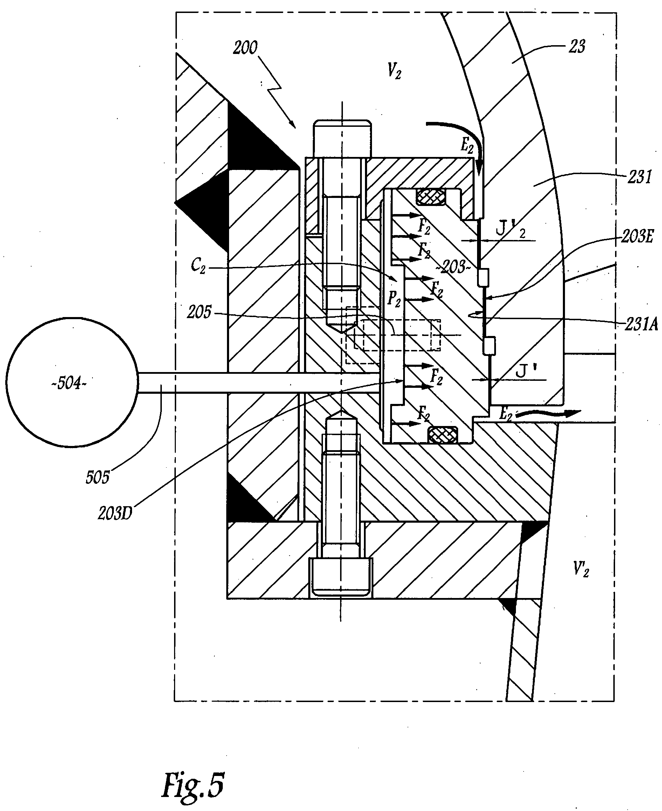

Comme précédemment, des coins rentrant définis par le boîtier 201 et des coins saillants définis par l'anneau 203 dans le plan des figures 4 et 5 permettent de centrer cet anneau par rapport à l'axe X₂ dans les deux configurations représentées respectivement sur ces figures.

La surface radiale interne 203E de l'anneau 203 est étagée, en ce sens qu'elle comprend trois portions 203E₁, 203E₂ et 203E₃ formées chacune
par une surface cylindrique à base circulaire, le diamètre de la portion 203E₂ étant supérieur à celui de la portion 203E₁ et inférieur à celui de la portion 203E₃.

De façon correspondante, la surface radiale externe 231A du bord aval 231 de la ceinture 23 se décompose en trois portions 231A₁, 231A₂ et 231A₃ de diamètres croissants.

Les surfaces 203E et 231 E définissent entre elles un passage tortueux à travers lequel peut s'écouler un débit de fuite, comme représenté par les flèches E₂ à la figure 4. On définit, comme précédemment, le jeu J' de fonctionnement de la turbine 1 au niveau de la couronne 23 comme la distance minimale entre les surfaces 203E et 231 A.

Dans les configurations où le jeu J' doit être maximum, notamment en cas de régimes transitoires comme envisagé ci-dessus au sujet du dispositif 100, le jeu J' est conservé à une valeur maximum J'₁ correspondant à la configuration de la figue 4, dans la mesure où la pression de l'eau dans la chambre C₂ est conservée à une valeur P₁ faible ou nulle.

Cette chambre C₂ est alimentée en eau sous pression par des moyens non représentés complètement comparables à ceux utilisés pour alimenter la chambre C₁, et qui comprennent une conduite 504 reliée à la chambre C₂ par des piquages 505. La conduite 504 peut être raccordée à la pompe 303 ou à une autre source d'eau sous pression. L'alimentation en eau de cette conduite est contrôlée, par exemple au moyen d'une électrovanne analogue à l'électrovanne 306, voire par cette même électrovanne si l'on choisit de faire varier les pressions dans les chambres C₁ et C₂ simultanément.

En régime établi d'utilisation de la turbine 1, le jeu J' peut être réduit jusqu'à une valeur J'₂ représentée à la figure 5. Pour ce faire, la pression de l'eau dans la chambre C₂ est portée à une valeur P₂ supérieure à la valeur P₁. Ceci a pour effet de rapprocher la surface 203E de la surface 231A, ce qui limite la section de passage de l'écoulement E₂ du volume V₂ vers le volume V'₂. A la figure 5, les flèches F₂ représentent l'effort de compression radiale de l'anneau 203 en direction de l'axe X₂ qui est dû à la pression P₂ de l'eau dans la chambre C₂ et s'exerce sur la surface radiale externe 203D de l'anneau 203.

La turbine représentée aux figures 1 à 5 est une turbine de haute chute pour laquelle l'emplacement des dispositifs 100 et 200 a été optimisé.

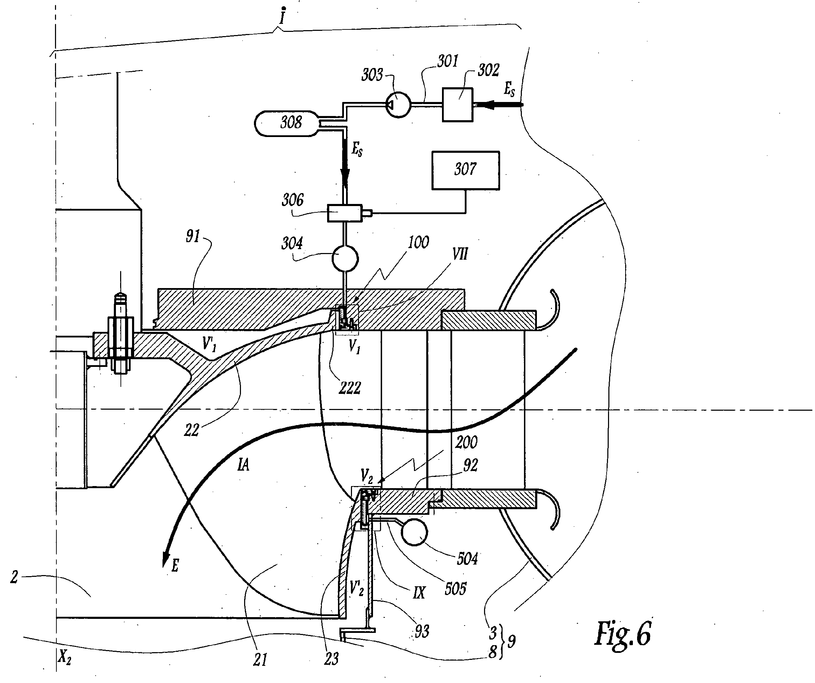

L'invention est également applicable aux turbines de basse chute, comme représenté aux figures 6 à 10 pour le deuxième mode de réalisation dans lequel les éléments analogues à ceux du premier mode de réalisation portent les mêmes références.

Dans ce mode de réalisation, un dispositif 100 de limitation de fuites est monté sur une plaque 91 appartenant à la structure fixe 9 de l'installation I, de façon à créer un jeu fonctionnel avec le bord radial externe 222 du plafond 22 de la roue 2. Le dispositif 100 comprend une plaque 101 immobilisée sur la partie 91 au moyen d'une vis 102. Par ailleurs, un logement est prévu dans la plaque 91, au voisinage du bord 222 pour recevoir un anneau 103 élastiquement déformable et dont les bords supérieur et inférieur sont respectivement pourvus de joints d'étanchéité 104A et 104B engagés dans des gorges 103A et 103B prévues à cet effet.

Un joint 106 assure l'étanchéité de l'assemblage entre la plaque 105 et la partie 91.

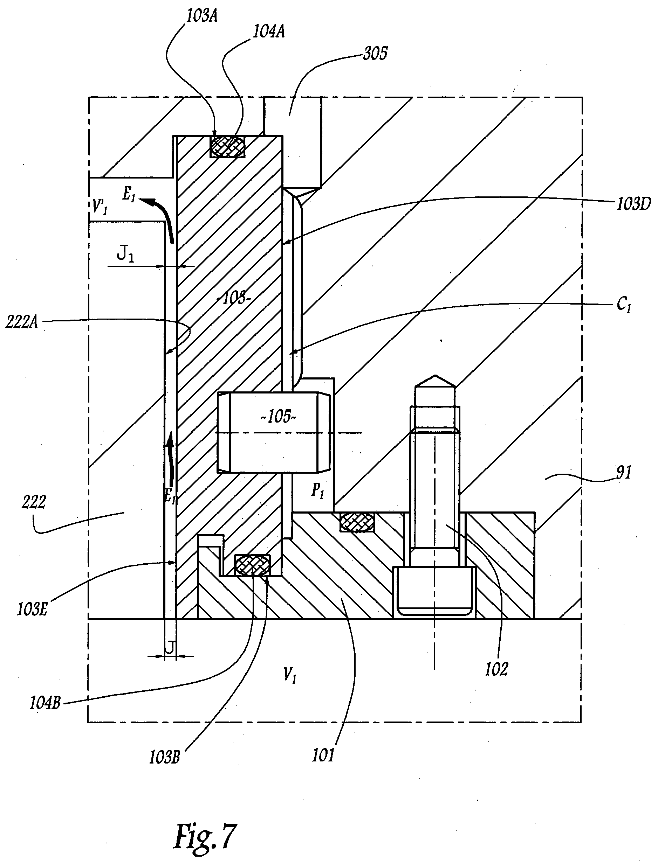

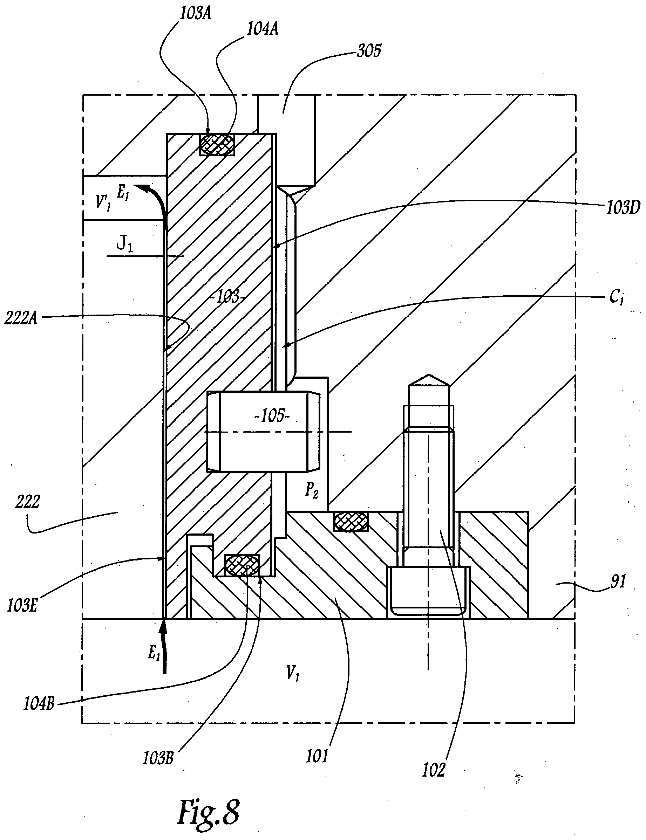

Plusieurs pions, dont un seul est visible aux figures 7 et 8 avec la référence 105, permettent l'indexation, en rotation autour de l'axe X₂ de rotation de la roue, de l'anneau 103 par rapport à la partie 91.

L'anneau 103 a une surface radiale externe 103E disposée en regard de la surface radiale externe 222A du bord 222, en définissant un jeu fonctionnel J qui permet le mouvement rotatif de la roue 2 par rapport à la partie fixe 81. Un écoulement parasite E₁ s'écoule dans l'espace annulaire délimite par les surfaces 103E et 222A, d'un volume V₁ dans lequel circule l'écoulement forcé E en entrée de la roue 2, à proximité du plafond 22, vers un volume V'₁ ménagé entre le plafond 22 et la partie 91, au dessus de la roue 2.

Une chambre C₁ de volume variable est définie entre la pièce 91 et la surface radiale externe 103D de l'anneau 103. Cette chambre est reliée par au moins un piquage 305 à des moyens d'alimentation analogues à ceux mentionnés pour le premier mode de réalisation et comprenant un tuyau 301 alimenté à partir d'un piquage ménagé sur une conduite d'alimentation de la bâche 3 de l'installation. Ce tuyau 301 alimente successivement un filtre 302, une pompe 303 et un réservoir-accumulateur 308. Ce réservoir accumulateur 308 est relié par un tuyau 309 à une conduite annulaire 304 à partir de laquelle s'étendent un ou plusieurs. piquages 305. Une électrovanne 306 pilotée par une unité électronique 307 contrôle l'écoulement d'eau secondaire E_{S} du réservoir-accumulateur 308 vers la conduite 304. Il est ainsi possible de contrôler la pression de l'eau présente dans la chambre C₁.

Pendant les régimes transitoires, la pression P₁ de l'eau dans la chambre C₁ a une valeur faible, voire nulle, de telle sorte que, sous l'effet de son élasticité, l'anneau 103 prend la position représentée à la figure 7 où le jeu J a une première valeur J₁ relativement importante.

En régime établi, une quantité d'eau supplémentaire est amenée dans la chambre C₁, ce qui a pour effet d'amener la pression dans cette chambre à une valeur P₂ supérieure à la valeur P₁. Ceci a pour effet de déformer radialement, en direction de l'axe X₂ et de la surface 222A, l'anneau 203 qui prend alors la configuration de la figure 8 où le jeu J a une valeur J₂ inférieure à celle de la configuration de la figure 7. Ceci permet de limiter la section de passage de l'écoulement parasite E₁ en direction du volume V'₁.

Un écoulement parasite tend à s'écouler entre un volume V₂ dans lequel circule l'écoulement forcé en entrée de la roue 2, à proximité de la ceinture 23, vers un volume V'₂ ménagé autour de la ceinture, entre cette ceinture et un cylindre fixe 93.

Un dispositif 200 est disposé au voisinage du bord amont 232 de la couronne 23 afin de limiter l'écoulement E₂. Ce dispositif 200 comprend un boîtier 201 formé de deux parties 201A et 201 B fixées sur une plaque 92 appartenant à la structure fixe 9 de l'installation I. Un anneau déformable 203 est monté dans le boîtier 201 et porte, au niveau de son bord supérieur, un joint torique 204A monté dans une gorge 203A. Par ailleurs, un joint torique 204B est monté dans la partie inférieure 201 B du corps 201, à l'intérieur d'une gorge 201 K.

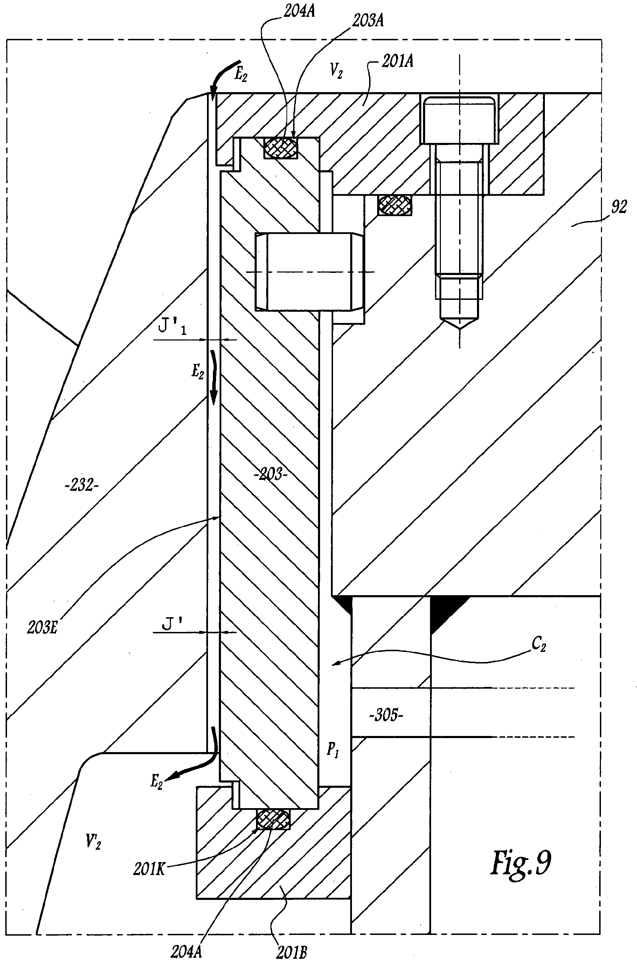

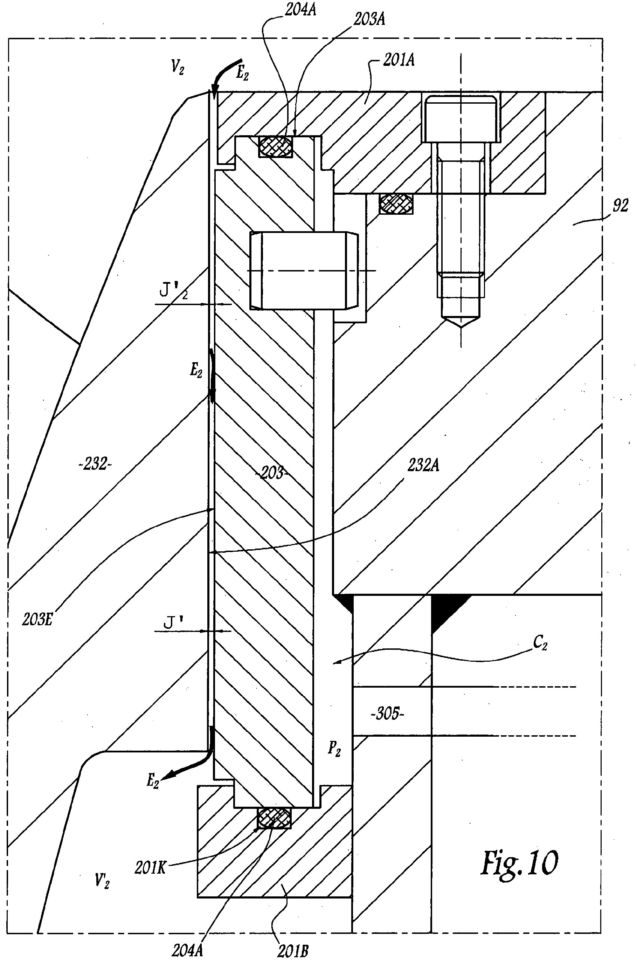

Une chambre de volume variable C₂ peut être alimentée en eau sous pression à travers un piquage 505, de telle sorte que l'anneau 203 prend l'une ou l'autre des configurations représentées respectivement aux figures 9 et 10, en fonction de la valeur de la pression, P₁ ou P₂, régnant respectivement dans la chambre C₂.

La chambre C₂ est reliée à une conduite annulaire 504 analogue à la conduite 304.

Ainsi, le jeu J' entre la surface radiale interne 203E de l'anneau 203 et la surface radiale externe 232A du bord 232 peut prendre l'une des valeurs J'₁ et J'₂ représentées respectivement aux figures 9 et 10. La configuration de la figure 10, où le jeu J' est minimal, est sélectionnée pour les régimes établis de fonctionnement de l'installation I, alors que celle de la figure 9 est préférée pour les régimes transitoires et les phases de changement de vitesse, notamment de démarrage ou de survitesse. L'écoulement parasite E₂ est ainsi minimisé en régime établi de fonctionnement de l'installation.

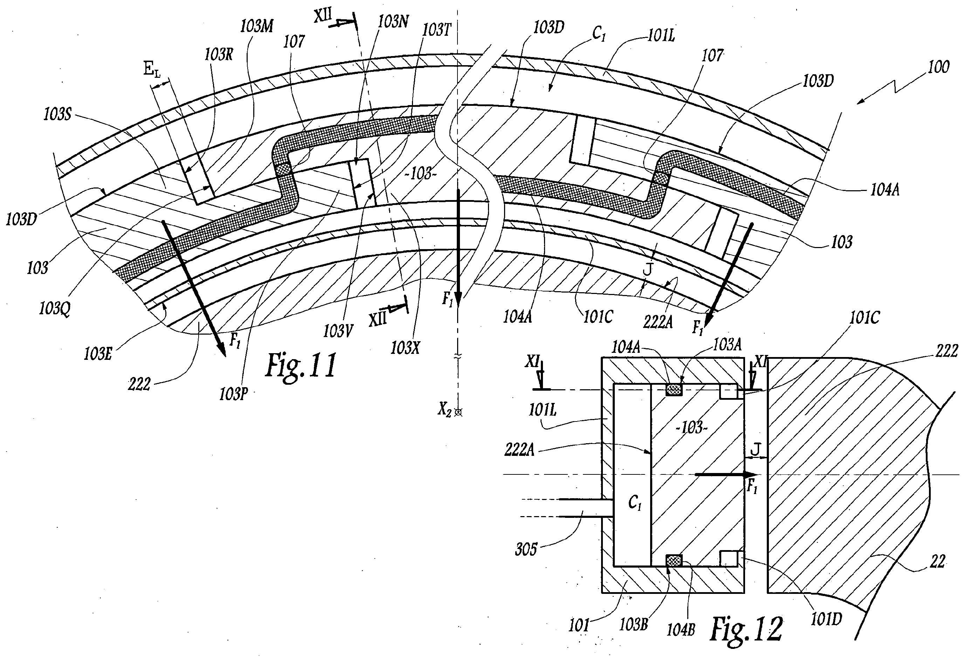

Dans le troisième mode de réalisation de l'invention représenté partiellement à la figure 11, les éléments analogues à celui du premier mode de réalisation portent des références identiques.

Dans le dispositif 100 de limitation des fuites d'eau, plusieurs segments 103 sont répartis autour du bord périphérique externe 222 du plafond 22 d'une roue de turbine Francis. Chaque segment 103 est équipé d'une gorge supérieure 103A et d'une gorge inférieure 103B dans laquelle est disposé un joint 104A ou 104B.

Les segments 103 sont en recouvrement les uns des autres, selon une direction radiale par rapport à l'axe de rotation X₂ de la roue 2. Plus précisément chaque anneau 103 comprend une partie 103M formant une feuillure 103N dans laquelle peut être engagée une partie correspondante 103P d'un segment adjacent. Les parties 103M et 103P de deux segments 103 adjacents sont donc en recouvrement l'une sur l'autre.

Ce recouvrement est effectué en ménageant un écart latéral E_{L} entre une surface sensiblement radiale d'extrémité 103Q d'une partie 103M d'un segment 103 et une surface en regard 103R d'une partie adjacente 103S d'un autre segment 103. De la même façon un écart latéral E'_{L} est ménagé entre deux surfaces radiales 103T et 103V délimitées respectivement par une partie 103P d'un segment 103 et d'une partie en regard 103X d'un autre segment 103.

Les segments 103 sont disposés dans un boîtier 101 contre lequel portent les joints 104A et 104B et qui comprend une cloison arrière 101L qui délimite, avec la surface radiale externe 103D des segments 103 et selon une direction radiale par rapport à l'axe X₂, une chambre C₁ de volume variable

Comme précédemment, il est possible de contrôler la pression d'une quantité d'eau introduite dans la chambre C₁ par un ou plusieurs piquages 305, afin de piloter le déplacement des segments 103 selon des directions radiales représentées par des flèches F₁ aux figures 11 et 12. Ceci permet de contrôler la valeur du jeu radial J entre la surface radiale interne 103E des différents segments 103 et la surface radiale externe 222A du bord 22.

Les écarts latéraux E_{L} E'_{L} permettent un rapprochement relatif des segments 103 lorsqu'ils se déplacent en direction de l'axe X₂.

Des joints 107 sont disposés parallèlement à l'axe X₂ et assurent l'étanchéité entre la chambre C₁ et l'interstice qui existe entre les surfaces 103T et 103V des segments 103.

Comme dans le premier mode de réalisation, le boîtier 101 est pourvu de parois 101C et 101D qui limitent le mouvement des segments 103 en direction de l'axe X₂.

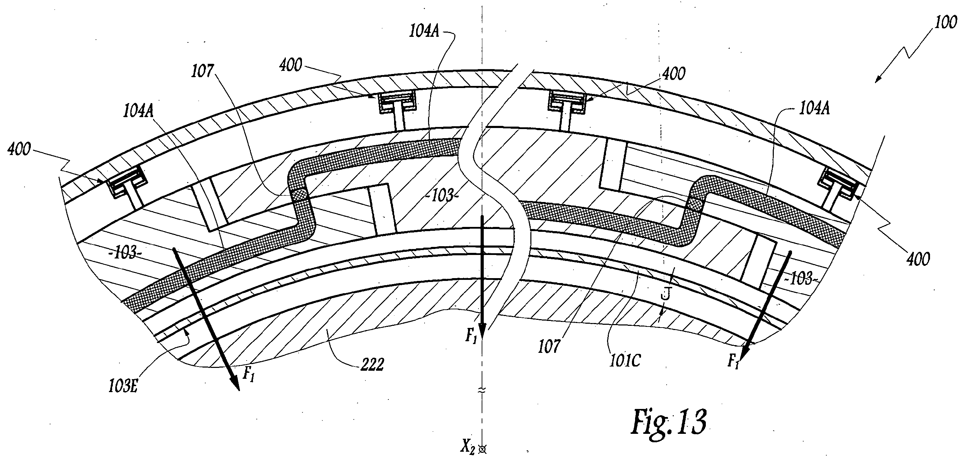

Dans le quatrième mode de réalisation de l'invention représenté à la figure 13, plusieurs segments 103 sont utilisés dans un dispositif 100 de limitation de fuite, comme dans le mode de réalisation des figures 11 et 12, ces segments étant en recouvrement partiel les uns des autres et étant équipés de joints 104A ou équivalents et 107.

Ce mode de réalisation diffère du précédent en ce que le positionnement radial des segments 103 est commandé non pas en jouant sur la pression dans une chambre située radialement à l'extérieur de ces segments, mais en utilisant des vérins à double effet 400 qui peuvent être pilotés hydrauliquement ou pneumatiquement.

En variante, les vérins utilisés sont des vérins à simple effet, auquel cas l'on compte sur la pression de l'écoulement entre les segments 103 et le bord 222 pour repousser ces segments vers une configuration écartée où le jeu J est augmenté.

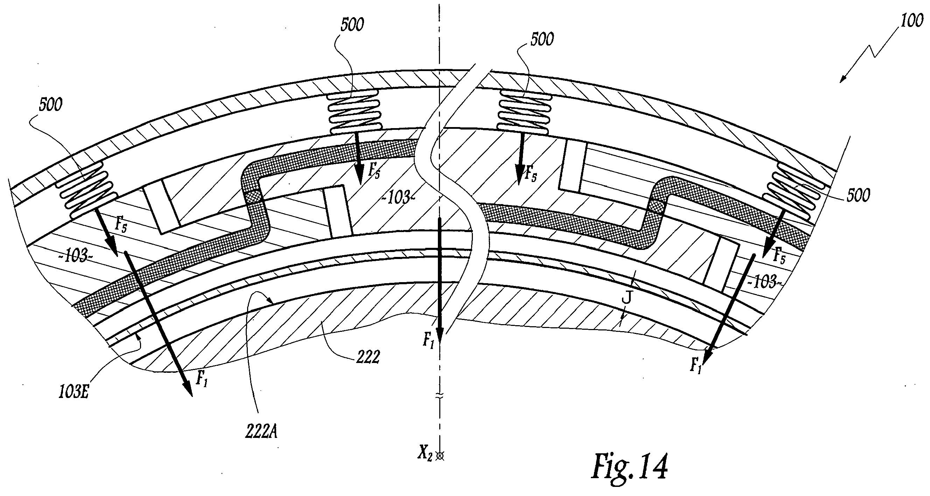

Dans le mode de réalisation de la figure 14, différents segments 103 sont utilisés, dans un dispositif 100 de limitation de fuite. Ces segments sont en recouvrement les uns des autres comme dans le mode de réalisation des figures 11 à 13. Dans ce mode de réalisation, des ressorts 500 sont répartis autour des segments 103 et permettent d'exercer sur ceux-ci un effort élastique F₅ dirigé vers l'axe X₂, ce qui permet de donner au jeu J entre les surfaces radiales internes 103E du segment 103 et la surface radiale externe 222A du bord 222 du plafond d'une roue de turbine, une valeur prédéterminée.

En cas de déséquilibre de la roue 2, celle-ci peut heurter l'un des segment 103 qui peut alors être repoussé à l'encontre de l'effort F₅ qu'il subit, sans détérioration notable du plafond de la turbine. En fait, cette propension à amortir les chocs est également présente dans les machines des modes de réalisation des figures 1 à 13 car les chambres C₁ permettent un débattement radial vers l'extérieur des anneaux 103 et 203 et des segments 103 en cas de choc. Ces chambres sont reliées au réservoir-accumulateur 308 et équivalents, ce qui permet d'évacuer une partie du liquide de commande en cas de déplacement radial centrifuge d'un anneau ou d'un segment sous l'effet d'un choc.

Selon la variante représentée à la figue 15, les ressorts 500 peuvent être remplacés par un unique ressort 600 disposé autour des segments 103 dans un dispositif 100 de limitation de fuite et exerçant également un effort élastique F₅ dirigé vers l'axe de rotation X₂ de la roue 2 et repartir sur les différents segments 103.

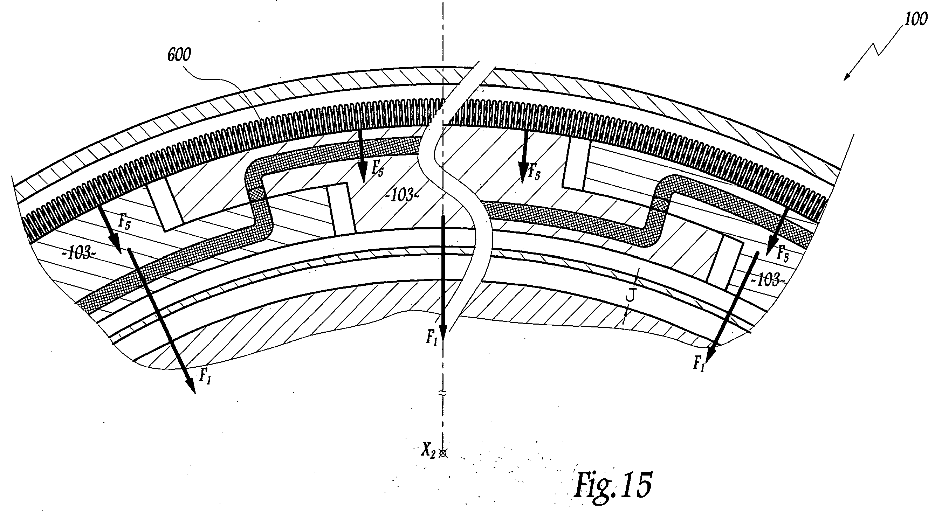

Dans les modes de réalisation des figures 14 et 15, chaque segment 103 peut coulisser selon une direction radiale F₁ en direction de l'axe X₂ et l'effort F₅ tend à ramener les segments dans une configuration où le jeu J est minimal.

L'invention a été décrite lors de sa mise en oeuvre dans une turbine Francis. Elle est toutefois applicable avec d'autres types de turbine, avec des pompes et avec des turbines-pompes.

Les caractéristiques techniques des modes de réalisations décrits et mentionnés ci-dessus peuvent être combinées entre elles dans le cadre de l'invention.

Les différents modes de commandes de la position des segments 103 envisagés dans les troisième, quatrième, cinquième et sixième modes de réalisation peuvent être combinés entre eux. En particulier des ressorts peuvent être prévus dans les modes de réalisation des figures 11 à 13.

Dans les premier, deuxième et troisième modes de réalisation, un fluide autre que de l'eau provenant de la conduite 4 peut être utilisé pour contrôler la position des organes 103 ou 203. On peut en particulier utiliser de l'huile ou de l'air sous pression.

## Revendications

1. Machine hydraulique comprenant une roue (2) mobile en rotation, par rapport à une structure fixe (9) et autour d'un axe (X₂) fixe, la roue étant destinée à être traversée par un écoulement forcé d'eau (E), alors qu'au moins un dispositif (100, 200) de limitation de fuite d'eau (E₁, E₂) est disposé entre la roue et la structure fixe, ce dispositif définissant un jeu (J, J') de fonctionnement entre la roue et la structure fixe et comprenant au moins un organe (103, 203) monté(s) sur la structure fixe (9), déformable et/ou mobile, uniquement selon une direction (F₁) radiale par rapport à l'axe de rotation (X₂), lorsque la roue est en rotation, entre une première configuration correspondant à une première valeur (J₁, J'₁) du jeu de fonctionnement et une deuxième configuration correspondant à une deuxième valeur (J₂, J'₂) du jeu de fonctionnement, la machine comprenant des moyens (306, 307 ; 400) de commande du passage de l'organe déformable et/ou mobile (103, 203) de sa première configuration vers sa deuxième configuration en fonction du régime de fonctionnement de la machine, l'organe (103, 203) présentant une surface radiale interne (103E, 203E) tournée vers une surface radiale externe (221A, 222A, 231A, 232A) de la roue (2), le jeu de fonctionnement (J, J') étant défini entre ces surfaces radiale(s) interne(s) et externe, la machine hydraulique étant **caractérisée en ce que** l'organe (103, 203) est déformable et/ou mobile, alors que la roue (2) est en rotation, et **en ce que** la surface radiale interne (103E, 203E) de l'organe (103, 203) est étagée, en ce sens qu'elle comprend trois portions (203E₁, 203E₂, 203E₃) formées chacune par une surface cylindrique à base circulaire, le diamètre d'une première portion (203E₂) étant supérieur à celui d'une deuxième portion (203E₁) et inférieur à celui d'une troisième portion (203E₃) parmi les portions de la surface radiale interne.

2. Machine selon la revendication 1, **caractérisée en ce que** la surface radiale externe (231A) se décompose en trois portions (231A₁, 231A₂ et 231A₃) de diamètres croissants, de sorte que les surfaces interne (203E) et externe (231 E) définissent entre elles un passage tortueux.

3. Machine selon l'une quelconque des revendications précédentes, **caractérisée en ce que** le dispositif de limitation de fuite comprend un organe (103, 203) déformable, sous l'effet de la pression (P₁, P₂) exercée par un fluide de commande, entre sa première configuration et sa deuxième configuration.

4. Machine selon la revendication 3, **caractérisée en ce que** l'organe déformable (103, 203) est apte à se déformer en se contractant radialement pour passer de sa première à sa deuxième configuration.

5. Machine selon l'une quelconque des revendications 1 ou 2, **caractérisée en ce que** le dispositif de limitation de fuite comprend plusieurs organes (103) mobiles radialement (F₁) par rapport à l'axe de rotation de la roue, entre une première configuration correspondant à une première valeur du jeu de fonctionnement (J) et une deuxième configuration correspondante à une deuxième valeur du jeu de fonctionnement.

6. Machine selon l'une des revendications 3 à 5, **caractérisée en ce qu'**elle comprend des moyens (101G-101J, 103G-103J) de centrage, par rapport à l'axe (X₂) de rotation de la roue, du ou des organe(s) (103) dans chacune des première et deuxième configurations.

7. Machine selon l'une des revendications 3 à 6, **caractérisée en ce que** l'organe (103, 203) ou chaque organe délimite, avec une partie (91, 101) de la structure fixe, une chambre (C₁, C₂) de volume variable en fonction de la configuration prise par le ou les organes, cette chambre étant alimentée en fluide de commande sous pression.

8. Machine selon la revendication 7, **caractérisée en ce qu'**elle comprend des moyens (306, 307, 308) de contrôle de l'alimentation de la chambre de volume variable (C₁, C₂) en fluide de commande sous pression.

9. Machine selon la revendication 5, **caractérisée en ce qu'**elle comprend des vérins (400) de commande du déplacement des organes mobiles entre les deux configurations.

10. Machine selon la revendication 5, **caractérisée en ce qu'**elle comprend au moins un moyen (500, 600) exerçant sur les organes mobile (103) un effort de rappel élastique (F₅) vers l'une des deux configuration.

11. Machine selon l'une des revendications 3 à 10, **caractérisée en ce qu'**elle comprend des moyens (105, 205) d'immobilisation du ou de chaque organe (103, 203) en rotation autour de l'axe (X₂) de rotation de la roue (2).

12. Machine selon l'une des revendications 3 à 7 et 11, **caractérisée en ce que** le fluide de commande est de l'eau prélevée sur une conduite (4) d'alimentation de la roue (2) en eau destinée à former l'écoulement forcé (E).

13. Installation (I) de conversion d'énergie hydraulique en énergie électrique, ou réciproquement, comprenant une machine (1) selon l'une des revendications précédentes.

14. Procédé d'ajustement du jeu de fonctionnement (J, J') d'un dispositif de limitation de fuite (100, 200) à jeu ajustable appartenant à une machine hydraulique (1) selon l'une des revendications 1 à 12, **caractérisé en ce que** l'ajustement a lieu alors que la roue (2) est en rotation autour de son axe (X₂) en adoptant une première valeur (J₁, J'₁) du jeu de fonctionnement pendant certaines phases de rotation de la roue, comprenant au moins des régimes transitoires, et une deuxième valeur du jeu (J₂, J'₂) de fonctionnement pendant certaines autres phases de rotation de la roue, comprenant au moins un régime stabilisé.

15. Procédé selon la revendication 14, **caractérisé en ce qu'**on adopte l'une des valeurs (J₁, J'₁, J₂, J'₂) du jeu de fonctionnement en contrôlant la pression et/ou la quantité d'un fluide de commande (Es) délivré au dispositif de limitation de fuite (100, 200).

## Patentansprüche

1. Hydraulische Maschine, umfassend ein Rad (2), das bezogen auf eine feste Struktur (9) und um eine feste Achse (X₂) drehbar ist, wobei das Rad dazu bestimmt ist, von einer erzwungenen Wasserströmung (E) durchquert zu werden, während mindestens eine Vorrichtung (100, 200) zur Beschränkung des Wasserverlusts (E₁, E₂) zwischen dem Rad und der festen Struktur angeordnet ist, wobei diese Vorrichtung ein Funktionsspiel (J, J') zwischen dem Rad und der festen Struktur definiert und mindestens ein Glied (103, 203) umfasst, das an der festen Struktur (9) montiert sowie, nur entlang einer radialen Richtung (F₁) bezogen auf die Rotationsachse (X₂), wenn sich das Rad in Rotation befindet, zwischen einer ersten Konfiguration, die einem ersten Wert (J₁, J_{'1}) des Funktionsspiels entspricht, und einer zweiten Konfiguration, die einem zweiten Wert (J₂, J_{'2}) des Funktionsspiels entspricht, verformbar und/oder beweglich ist, wobei die Maschine Mittel (306, 307; 400) zur Steuerung des Übergangs des verformbaren und/oder beweglichen Glieds (103, 203) aus seiner ersten Konfiguration in seine zweite Konfiguration abhängig vom Betriebszustand der Maschine umfasst, wobei das Glied (103, 203) eine radiale Innenfläche (103E, 203E), die zu einer radialen Außenfläche (221A, 222A, 231A, 232A) des Rads (2) gerichtet ist, aufweist, wobei das Funktionsspiel (J, J') zwischen dieser/diesen radialen Innenfläche(n) und dieser radialen Außenfläche definiert ist, wobei die hydraulische Maschine **dadurch gekennzeichnet ist, dass** das Glied (103, 203) verformbar und/oder beweglich ist, während sich das Rad (2) in Rotation befindet, und dass die radiale Innenfläche (103E, 203E) des Glieds (103, 203) abgestuft ist, in dem Sinne, dass sie drei Abschnitte (203E₁, 203E₂, 203E₃), die jeweils durch eine zylindrische Fläche mit kreisförmiger Basis gebildet werden, umfasst, wobei der Durchmesser eines ersten Abschnitts (203E₂) größer als der eines zweiten Abschnitts (203E₁) und kleiner als der eines dritten Abschnitts (203E₃) unter den Abschnitten der radialen Innenfläche ist.

2. Maschine nach Anspruch 1, **dadurch gekennzeichnet, dass** die radiale Außenfläche (231A) sich aus drei Abschnitten (231A₁, 231A₂ und 231A₃) mit wachsendem Durchmesser zusammensetzt, dergestalt, dass die Innenfläche (203E) und Außenfläche (231E) zwischen sich einen gewundenen Weg definieren.

3. Maschine nach einem der vorangehenden Ansprüche, **dadurch gekennzeichnet, dass** die Vorrichtung zur Verlustbeschränkung ein Glied (103, 203) umfasst, das unter der Wirkung des durch ein Steuermedium ausgeübten Drucks (P₁, P₂) zwischen seiner ersten Konfiguration und seiner zweiten Konfiguration verformbar ist.

4. Maschine nach Anspruch 3, **dadurch gekennzeichnet, dass** das verformbare Glied (103, 203) in der Lage ist, sich zu verformen, indem es sich radial zusammenzieht, um aus seiner ersten in seine zweite Konfiguration überzugehen.

5. Maschine nach einem der Ansprüche 1 oder 2, **dadurch gekennzeichnet, dass** die Vorrichtung zur Verlustbeschränkung mehrere Gliede (103) umfasst, die radial (F₁) bezogen auf die Rotationsachse des Rads zwischen einer ersten Konfiguration, die einem ersten Wert des Funktionsspiels (J) entspricht, und einer zweiten Konfiguration, die einem zweiten Wert des Funktionsspiels entspricht, beweglich sind.

6. Maschine nach einem der Ansprüche 3 bis 5, **dadurch gekennzeichnet, dass** sie Mittel (101G-101J, 103G-103J) zur Zentrierung, bezogen auf die Rotationsachse (X₂) des Rads, des oder der Glieds/Glieder (103) in jeder der ersten und zweiten Konfiguration umfasst.

7. Maschine nach einem der Ansprüche 3 bis 6, **dadurch gekennzeichnet, dass** das Glied (103, 203) oder jedes Glied, mit einem Teil (91, 101) der festen Struktur, eine Kammer (C₁, C₂) mit entsprechend der von dem oder den Gliedern angenommenen Konfiguration variablem Rauminhalt begrenzt, wobei diese Kammer mit einem Steuermedium unter Druck versorgt wird.

8. Maschine nach Anspruch 7, **dadurch gekennzeichnet, dass** sie Mittel (306, 307, 308) zum Regulieren der Versorgung der Kammer mit variablem Rauminhalt (C₁, C₂) mit einem Steuermedium unter Druck umfasst.

9. Maschine nach Anspruch 5, **dadurch gekennzeichnet, dass** sie Zylinder (400) zur Steuerung der Bewegung der beweglichen Glieder zwischen den beiden Konfigurationen umfasst.

10. Maschine nach Anspruch 5, **dadurch gekennzeichnet, dass** sie mindestens ein Mittel (500, 600) umfasst, das auf die beweglichen Glieder (103) eine elastische Rückholkraft (F₅) zu einer der beiden Konfigurationen ausgeübt.

11. Maschine nach einem der Ansprüche 3 bis 10, **dadurch gekennzeichnet, dass** sie Mittel (105, 205) zum Sichern des oder jedes Glieds (103, 203) gegen eine Rotation um die Rotationsachse (X₂) des Rads (2) umfasst.

12. Maschine nach einem der Ansprüche 3 bis 7 und 11, **dadurch gekennzeichnet, dass** das Steuermedium Wasser ist, das aus einer Leitung (4) zur Versorgung des Rads (2) mit Wasser, das zur Bildung der erzwungenen Strömung (E) bestimmt ist, entnommen wird.

13. Anlage (I) zur Umwandlung von hydraulischer Energie in elektrische Energie, oder umgekehrt, umfassend eine Maschine (1) nach einem der vorangehenden Ansprüche.

14. Verfahren zum Einstellen des Funktionsspiels (J, J') einer Vorrichtung zur Verlustbeschränkung (100, 200) mit einstellbarem Spiel, die zu einer hydraulischen Maschine (1) nach einem der Ansprüche 1 bis 12 gehört, **dadurch gekennzeichnet, dass** die Einstellung stattfindet, während das Rad (2) sich um seine Achse (X₂) dreht und dabei einen ersten Wert (J₁, J'₁) des Funktionsspiels während bestimmter Phasen der Rotation des Rads, die mindestens Übergangszustände umfassen, und einen zweiten Wert des Funktionsspiels (J₂, J'₂) während bestimmter anderer Phasen der Rotation des Rads, die mindestens einen stabilisierten Zustand umfassen, annimmt.

15. Verfahren nach Anspruch 14, **dadurch gekennzeichnet, dass** einer der Werte (J₁, J'₁, J₂, J'₂) angepasst wird durch das Funktionsspiel des Regulierens des Drucks und/oder der Menge eines Steuermediums (Eₛ), das der Vorrichtung zur Verlustbeschränkung (100, 200) bereitgestellt wird.

## Claims

1. Hydraulic machine comprising a runner (2) capable of rotating, with respect to a stationary structure (9) and about a fixed axis (X₂), the runner being intended to have a forced flow of water (E) passing through it, while at least one device (100, 200) for limiting water leaks (E₁, E₂) is arranged between the runner and the fixed structure, this device defining an operating clearance (J, J') between the runner and the fixed structure and comprising at least one member (103, 203) mounted on the fixed structure (9), deformable and/or able to move, only in a radial direction (F₁) with respect to the axis of rotation (X₂), when the runner is rotating, between a first configuration corresponding to a first value (J₁, J'₁) for the operating clearance and a second configuration corresponding to a second value (J₂, J'₂) for the operating clearance, the machine comprising means (306, 307; 400) commanding the switching of the deformable and/or mobile member (103, 203) from its first configuration into its second configuration according to the operating conditions of the machine, the member (103, 203) having an internal radial surface (103E, 203E) facing towards an external radial surface (221A, 222A, 231A, 232A) of the runner (2), the operating clearance (J, J') being defined between these internal and external radial surfaces, the hydraulic machine being **characterized in that** the member (103, 203) is deformable and/or capable of moving, while the runner (2) is rotating, and **in that** the internal radial surface (103E, 203E) of the member (103, 203) is stepped in so far as it comprises three portions (203E₁, 203E₂, 203E₃) each formed by a cylindrical surface on a circular base, the diameter of a first portion (203E₂) being greater than that of a second portion (203E₁) and less than that of a third portion (203E₃) from among the internal radial surface portions.

2. Machine according to Claim 1, **characterized in that** the external radial surface (231A) can be broken down into three portions (231A₁, 231A₂, and 231A₃) of increasing diameters, so that the internal (203E) and external (231E) surfaces between them define a tortuous path.

3. Machine according to either one of the preceding claims, **characterized in that** the leak-limiting device comprises a member (103, 203) that is deformable, under the effect of the pressure (P₁, P₂) applied by a control fluid, between its first configuration and its second configuration.

4. Machine according to Claim 3, **characterized in that** the deformable member (103, 203) is capable of deforming by contracting radially to transition from its first to its second configuration.

5. Machine according to any one of Claims 1 or 2, **characterized in that** the leak-limiting device comprises several members (103) capable of moving radially (F₁) with respect to the axis of rotation of the runner, between a first configuration corresponding to a first value for the operating clearance (J) and a second configuration corresponding to a second value of the operating clearance.

6. Machine according to one of Claims 3 to 5, **characterized in that** it comprises means (101G-101J, 103G-103J) for centring the member or members (103) with respect to the axis (X₂) of rotation of the runner, in each of the first and second configurations.

7. Machine according to one of Claims 3 to 6, **characterized in that** the member (103, 203) or each member delimits, with a part (91, 101) of the fixed structure, a chamber (C₁, C₂) the volume of which can vary according to the configuration adopted by the member or members, this chamber being supplied with control fluid under pressure.

8. Machine according to Claim 7, **characterized in that** it comprises means (306, 307, 308) of controlling the supply of pressurized control fluid to the variable-volume chamber (C₁, C₂).

9. Machine according to Claim 5, **characterized in that** it comprises actuating cylinders (400) to bring about the movement of the mobile members between the two configurations.

10. Machine according to Claim 5, **characterized in that** it comprises at least one means (500, 600) applying to the mobile members (103) an elastic return force (F₅) urging them toward one of the two configurations.

11. Machine according to one of Claims 3 to 10, **characterized in that** it comprises means (105, 205) of immobilizing one or each member (103, 203) in terms of rotation about the axis of rotation (X₂) of the runner (2).

12. Machine according to one of Claims 3 to 7 and 11, **characterized in that** the control fluid is water taken from a penstock pipe (4) supplying the runner (2) with water intended to form the forced flow (E).

13. Installation (I) for converting hydraulic energy into electrical energy or vice versa, comprising a machine (1) according to one of the preceding claims.

14. Method for adjusting the operational clearance (J, J') of an adjustable-clearance leak-limiting device (100, 200) forming part of a hydraulic machine (1) as claimed in one of Claims 1 to 12, **characterized in that** the adjustment is performed while the runner (2) is rotating about its axis (X₂) by adopting a first value (J₁, J'₁) for the operating clearance during certain phases of the rotation of the runner, including at least transient states, and a second value of the operating clearance (J₂, J'₂) during certain other phases of the rotation of the runner, including at least one steady state.

15. Method according to Claim 14, **characterized in that** one of the values (J₁, J'₁, J₂, J'₂) of the operating clearance is adopted by controlling the pressure and/or quantity of a control fluid (Eₛ) delivered to the leak-limiting device (100, 200).
